# EUROPEAN PATENT SPECIFICATION

(11) **EP 3 879 842 B1**
(45) Date of publication and mention of the grant of the patent: **14.10.2026**
(21) Application number: 19881958.3
(22) Date of filing: 05.11.2019
(51) Int. Cl.: H04N 21/845, H04N 21/433

(54) **STREAMING MEDIA VIDEO DATA PROCESSING METHOD AND APPARATUS, AND COMPUTER DEVICE AND STORAGE MEDIUM**
VERFAHREN UND EINRICHTUNG ZUR VIDEODATENVERARBEITUNG VON STREAMING-MEDIEN UND COMPUTERVORRICHTUNG UND SPEICHERMEDIUM
PROCÉDÉ ET APPAREIL DE TRAITEMENT DE DONNÉES VIDÉO DE MÉDIA EN FLUX, ET DISPOSITIF INFORMATIQUE ET SUPPORT DE STOCKAGE

(30) Priority: 06.11.2018 CN 201811314448
(43) Date of publication of application: 15.09.2021
(73) Proprietor: ZTE Corporation, Shenzhen, Guangdong 518057 (CN)
(72) Inventor: SUN, Jun, Shenzhen, Guangdong 518057 (CN); WANG, Yong, Shenzhen, Guangdong 518057 (CN)
(74) Representative: Ipsilon
(86) International application number: PCT/CN2019/115725
(87) International publication number: WO 2020/094012

(56) References cited:
- EP-A1- 3 379 836
- CN-A- 101 415 069
- CN-A- 102 611 945
- CN-A- 102 857 794
- CN-A- 102 883 187
- CN-A- 105 763 960
- CN-A- 105 872 807
- CN-A- 106 534 946
- CN-A- 108 235 151
- US-A1- 2013 308 699

## Description

### TECHNICAL FIELD

The present disclosure relates to the field of communication technologies, and in particular, to a method and apparatus of processing streaming media video data, a computer device, and a storage medium.

### BACKGROUND

With the rapid development of the Internet, the flow of video and voice is continuously increased, and the video resources based on FLV (Flash Video) format have become the contents of mainstream video website in China. The FLV is a brand-new video format. Due to the characteristics of extremely small file size, extremely high loading speed and convenience in transmission, the FLV actually has become a current standard of online video playing. The possibility of watching high-definition video files through a network can be realized. The abundant and diverse video resources on the network are gradually relying mainly on the FLV format. Research has discovered that the requirements on the FLV video format are varied dependently on video website playing platforms.

The cache acceleration server generally adopts a form of caching the whole FLV resource file. When a user requests for the video resource again, the fragment content requested by the user can be read by hitting and analyzing the local video resource in FLV format, so that the video acceleration service is provided for the user. When the user is interested only in a certain section of content of the video resource, the video cache acceleration server needs to cache the whole video resource, which results in a waste of disk space.

EP 3 379 836 A1 discloses a method for accelerating streaming media playback by downloading and caching video segments. Upon receiving a playback request, the system acquires video data from a requested playback position and prefetches subsequent segments for playback. The caching strategy is based on playback-related parameters such as a requested time point and segment length in order to reduce playback delay and improve streaming continuity.

CN 102 611 945 A relates to adaptive streaming media segmentation. A segmentation server determines segment characteristics from configuration information associated with a client domain, generates media segments accordingly, caches the generated segments, and provides different segment formats or bitrates depending on client and network requirements.

CN 108 235 151 A discloses segmenting live-stream data, generating index files associated with the segments, storing both on a server, and subsequently retrieving and combining selected segments into a recording for playback. The index files allow fast segment location and improve recording completeness and robustness.

### SUMMARY

In order to address the technical problems, the present disclosure provides a streaming media video data processing method and apparatus, computer device and storage medium, as defined in the appended claims.

### BRIEF DESCRIPTION OF THE DRAWINGS

The accompanying drawings, which are incorporated in and constitute a part of the specification, illustrate examples consistent with the present disclosure and, together with the specification, serve to explain the principles of the disclosure.

In order to more clearly illustrate the examples of the present disclosure or technical schemes in some instances, the accompanying drawings used in the description of the examples or some instances will be briefly explained below. It will be appreciated that an ordinary person skilled in the related art can obtain further drawings without paying inventive labor.
FIG. 1 is a diagram illustrating an application scenario of a streaming media video data processing method according to an embodiment;
FIG. 2 is a flowchart illustrating a streaming media video data processing method according to an embodiment;
FIG. 3 is a flowchart illustrating a streaming media video data processing method according to another example;
FIG. 4 is a flowchart illustrating a step of determining fragment information according to an embodiment;
FIG. 5 is a flowchart illustrating a streaming media video data processing method according to a specific embodiment;
FIG. 6 is a block diagram illustrating a structure of a streaming media video data processing apparatus according to an embodiment;
FIG. 7 is a block diagram illustrating a structure of a streaming media video data processing apparatus according to another example;
FIG. 8 is a block diagram illustrating a structure of a data cache module according to an embodiment; and
FIG. 9 is a block diagram illustrating an internal structure of a computer device according to an embodiment.

### DETAILED DESCRIPTION

To make the objectives, technical schemes and advantages of the embodiments of the present disclosure become more apparent, the technical schemes in the embodiments of the present disclosure will be described clearly and completely with reference to the drawings in the embodiments of the present disclosure. It is obvious that the described embodiments are some, but not all, embodiments of the present disclosure. Other embodiments, which can be derived by a person skilled in the art from the embodiments disclosed herein without paying any creative effort, shall fall within the scope of the disclosure.

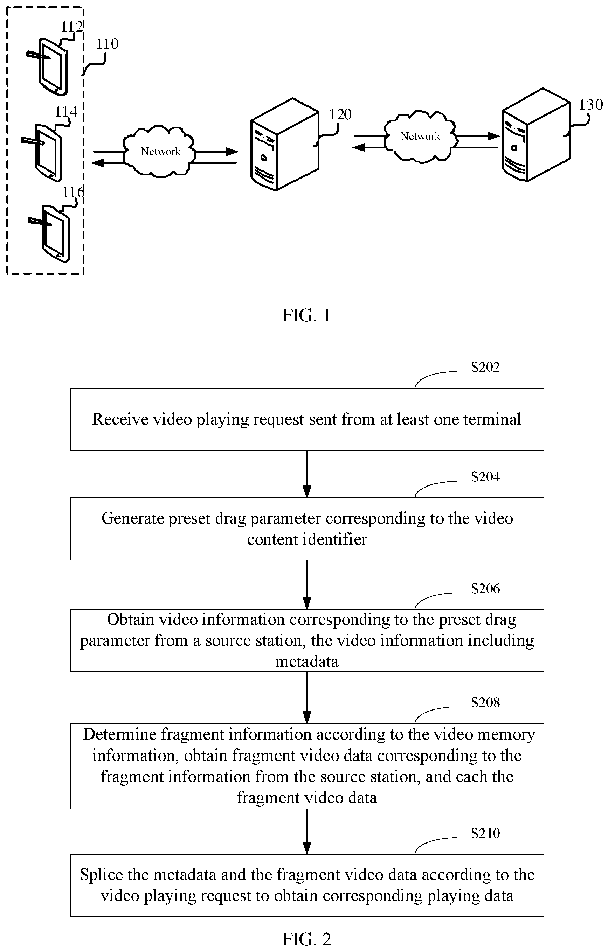

FIG. 1 is a diagram illustrating an application scenario of a streaming media video data processing method according to an embodiment. Referring to FIG. 1, the streaming media video data processing method is applied to a streaming media video data processing system. The streaming media video data processing system includes a terminal group 110, a cache acceleration server 120, and a source station 130. The terminal group 110 includes a plurality of terminals, such as a terminal 112, a terminal 114 and terminals 116 and is connected to cache acceleration server 120 through a network. The cache acceleration server 120 is connected to the source station 130 through the network. The cache acceleration server 120 obtains and receives a video playing request sent from at least one terminal. The video playing request carries a video content identifier and video memory information corresponding thereto, so as to generate preset drag parameters corresponding to the video content identifier and to obtain video information corresponding to the drag parameters from the source station 130. The video information comprises metadata. Fragment information is determined according to the video memory information, so as to obtain fragment video data corresponding to the fragment information from the source station 130. The fragment video data is cached. The metadata and the fragment video data are spliced according to the video playing request to obtain corresponding playing data. The playing data is sent to a corresponding terminal.

In particular, the terminal 110 can be a desktop terminal or a mobile terminal. The mobile terminal can be at least one of a mobile phone, a tablet computer, a notebook computer, for example. The cache acceleration server 120 and the source station 130 each can be embodied as a stand-alone server or a server cluster formed of multiple servers.

As shown in FIG. 2, in an embodiment, there is provided a streaming media video data processing method. The embodiment is mainly illustrated by way of applying the method to the cache acceleration server 120 in FIG. 1. Referring to FIG. 2, the streaming media video data processing method specifically includes the following steps:
Step S202, a video playing request sent from at least one terminal is received.

In an embodiment, the video playing request carries a video content identifier and corresponding video memory information. The video playing request refers to a request sent from a user for obtaining playing data, and carries a video content identifier and video memory information, wherein the video content identifier is label data for identifying video content. The video content identifier includes at least one of a video theme, a video drag parameter, a video category, for example. The video drag parameter includes at least one of a start position parameter and an end position parameter. The start position parameter can be represented by START, and the end position parameter can be represented by END. The video memory information includes memory size information of the video and playing position information of the video, for example. The cache acceleration server is a server for caching video data, and can obtain the video playing request sent from at least one terminal.

Step S204, a preset drag parameter corresponding to the video content identifier is generated.

Step S206, video information corresponding to the preset drag parameter is obtained from a source station, the video information including metadata.

In an embodiment, the preset drag parameter is a preset parameter including a preset start position parameter and a preset end position parameter. The preset drag parameter can be configured to obtain the video information corresponding to the video content identifier, wherein the video information comprises metadata and video data determined according to the dragging start position and the dragging end position of the preset drag parameter. The preset drag parameter comprises a preset start position parameter START and a preset end position parameter END, wherein the START and the END can be preset, for example, START =0 and END =1. After the preset drag parameter is generated, the preset drag parameter is sent to the source station, and the source station obtains corresponding video data and metadata according to the preset drag parameter and returns the obtained video data and metadata to the server. Herein, the source station refers to a server for storing streaming media video data, and the metadata (METADATA) is data for describing the streaming media video data and especially describing data attribute information of the streaming media video data.

Step S208, fragment information is determined according to the video memory information, fragment video data corresponding to the fragment information is obtained from the source station, and the fragment video data is cached.

In an embodiment, the fragment information refers to attribute information of the fragmented video data, including memory size information and playing position information of the fragmented video data. The fragment information is sent to the source station to obtain the fragment video data corresponding to the fragment information from the source station, wherein the fragment video data refers to video data obtained by dividing video data with a larger size according to a certain memory size. If a video having a size of 20M is dived by 2M, 10 pieces of fragmented video data can be obtained, wherein the memory size of each piece of fragmented video data is 2M, such that the memory size of the fragmented video data in the cache acceleration server is 2M.

Step S210, the metadata and the fragment video data are spliced according to the video playing request to obtain corresponding playing data.

In an embodiment, the playing data is video data for sending to a playing terminal, and the video data is obtained by splicing the cached fragment video data and the metadata according to the video playing request sent from a user. The video playing requests sent from the users are different. The playing data obtained when splicing the video data and the metadata are different. If the video playing request sent from the user carries the drag parameter START or END, the metadata and the video data corresponding to the drag parameter are directly spliced to obtain the playing data. When the video playing request sent from the user does not contain the drag parameter START or END, the fragment video data returned by the source station are directly spliced to obtain playing data.

In a specific embodiment, the video playing request sent from a user carries a drag parameter, and fragment video data corresponding to the drag parameter is spliced. In other words, when a video memory size corresponding to the drag parameter is the same as a sum of memory sizes of a plurality of segment video data, the plurality of fragment video data and the metadata are directly spliced to form playing data; otherwise, fragment video data in which video contents of the fragment video data are all consistent, videos in which a part of video contents of the fragment video data are consistent with the content of the drag parameter, and the metadata are obtained and spliced, so as to obtain the playing data. For example, when the video content that the user is interested in has a size of 10M-20M, the fragment video data of 10M-12M, 12M-14M, 14M-16M, 16M-18M and 18M-20M and the metadata are spliced to obtain the playing data; when the video content that the user desires to watch has a size of 10M-19M, the fragment video data of 10M-12M, 12M-14M, 14M-16M, 16M-18M and 18M-19M and the metadata are spliced to obtain the playing data.

In an embodiment, before generating the preset drag parameter corresponding to the video content identifier, the method further includes: a step of judging whether metadata corresponding to the video playing request is present. If present, then go to a step of determining the fragment information according to the video memory information, or if not present, then go to a step of obtaining the video information corresponding to the drag parameter from the source station.

In an embodiment, after generating the preset drag parameter corresponding to the video content identifier, the cache acceleration server first performs a local search on whether metadata corresponding to the video playing request is present, wherein the metadata includes the video content identifier.

In an embodiment, matching is performed on the video content identifier in the video playing request and the video content identifier of each metadata in the cache acceleration server.

When the matching is successful, it is indicated that the cache acceleration server has cached a part of or all the fragment video data corresponding to the video content identifier and the step of determining fragment information according to the video memory information is carried out.

When the matching fails, it is indicated that the fragment video data corresponding to the video content identifier is not present in the cache acceleration server and the step of obtaining the video information corresponding to the drag parameter from the source station is carried out. Judgment is directly performed according to the metadata to avoid repeated acquisition of the same data.

In an embodiment, before determining the fragment information according to the video memory information, the method further includes: judging whether all the fragment video data corresponding to the video playing request is cached, wherein when all the fragment video data is cached, the step of splicing the metadata and the fragment video data according to the video playing request to obtain corresponding playing data is carried out, or when not all the fragment video data is cached, the step of judging all the fragment video data is continuously carried out until all the fragment video data is cached.

In an embodiment, when the video content identifier of the metadata in the cache acceleration server matches the video content identifier in the video playing request, it is judged whether the fragment video data cached in the cache acceleration server matches the video data of the video playing request. If matched, the metadata and the fragment video data are spliced according to the video playing request to obtain the playing data. For example, when the video data that the user is interested in involves 10-20 minutes and the cache acceleration server contains the video data involving 10-20 minutes, the fragment video data and the metadata in the cache acceleration server are directly spliced to obtain the playing data. If not matched, corresponding video data is obtained from the source station according to the video memory information in the video playing request and cached to the cache acceleration server in a way of fragmentation. Herein, if the cache acceleration server contains a part of video data corresponding to the video playing request, the rest part is obtained from the source station. For example, when the video data that the user is interested in involves 10-40 minutes and the cache acceleration server contains video data involving 10-20 minutes, the rest video data involving 20-40 minutes is obtained from the source station. If the cache acceleration server does not contain the video data corresponding to the video playing request, the video data corresponding to the video playing request is obtained from the source station. Judging whether the corresponding video data is present in the cache acceleration server would avoid obtaining repeated video data. It is more convenient to directly obtain the video data from the cache acceleration server.

In an embodiment, after step S210, the method further includes:
Step S212, a terminal identifier in the video playing request is extracted, and the playing data is sent to a terminal corresponding to the terminal identifier.

In an embodiment, the terminal identifier is tag data for identifying the terminal, and the terminal identifier may be formed of letters, characters, special symbols, numbers, and the like. Each video playing request carries a corresponding terminal identifier. After obtaining the playing data by splicing, the cache acceleration server extracts the terminal identifier in the video playing request and sends the playing data to a terminal corresponding to the terminal identifier. For example, when a terminal A sends a video playing request for playing program X, playing data is sent to the terminal A after the playing data of the program X is obtained.

The streaming media video data processing method comprises the steps of receiving a video playing request sent from at least one terminal, wherein the video playing request carries a video content identifier and corresponding video memory information; generating a preset drag parameter corresponding to the video content identifier; obtaining video information corresponding to the preset drag parameter from a source station, wherein the video information comprises metadata; determining fragment information according to the video memory information, obtaining a fragment video corresponding to the fragment information from the source station, and caching fragment video data; and splicing the metadata and the fragment video data according to the video playing request to obtain corresponding playing data. The cache acceleration server automatically generates the preset drag parameter according to the video playing request, obtains the video information from the source station according to the preset drag parameter, obtains the fragment video data from the source station according to information carried in the video playing request, and splices the fragment video data according to the video playing request to obtain playing data. Herein, the preset drag parameter can be used for obtaining the metadata. There are differences in the content of video request response between different video providers. The metadata can be separated through the preset drag parameter. The corresponding video data can be obtained according to the video playing request. Subsequently, the video data and the metadata are spliced. In this way, the cache acceleration server can better obtain the videos from the different video providers, thereby fulfilling the user requirements. By way of fragmentation caching, the load of the source station can be reduced by caching video data corresponding to the user requirement and the disk space of the caching acceleration server can be more effectively utilized.

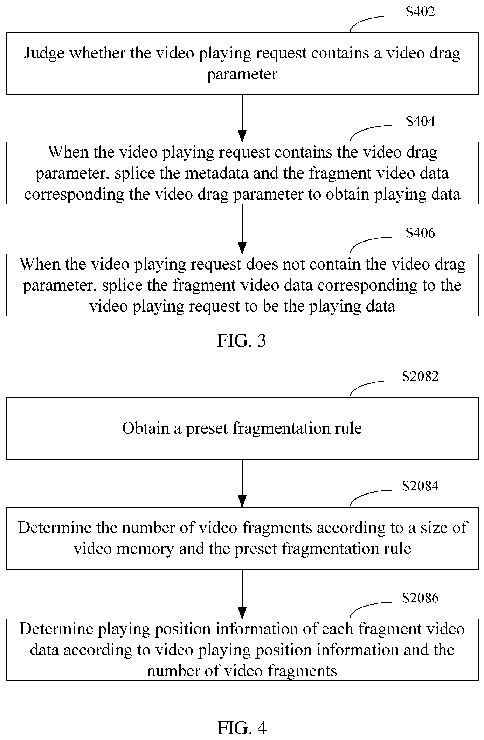

In an embodiment, as shown in FIG. 3, before step S210, the method further includes:
Step S402, judging whether the video playing request contains a video drag parameter;
Step S404, when the video playing request contains the video drag parameter, splicing the metadata and the fragment video data corresponding to the video drag parameter to obtain playing data; and
Step S406, when the video playing request does not contain the video drag parameter, splicing the fragment video data corresponding to the video playing request to be the playing data.

In an embodiment, it is judged whether a video playing request sent from a user includes a video drag parameter, where the video drag parameter is an identifier for describing video data that the user desires to cache. The identifier may be represented by at least one of a start position and an end position, where the start position is described by START and the end position is described by END. When the video playing request contains the video drag parameter, the metadata and the fragment video data corresponding to the video playing request are spliced to obtain playing data. For example, when the video playing request contains a video drag parameter START = 10 and END = 30, the metadata and the fragment video data corresponding to the video drag parameter START = 10 and END = 30 are spliced to obtain the playing data. When the video playing request does not contain the video drag parameter, the fragment video data corresponding to the video playing request is directly spliced to obtain playing data.

In an embodiment, as shown in FIG. 4, Step S208 includes:
Step S2082, obtaining a preset fragmentation rule;
Step S2084, determining the number of video fragments according to a size of video memory and the preset fragmentation rule; and
Step S2086, determining playing position information of each fragment video data according to video playing position information and the number of video fragments.

In an example, the preset fragmentation rule, which can be customized, refers to a preset rule for fragmenting a video. The rule may be a rule that is customized by a skilled person after analyzing according to a network bandwidth and a server performance, for example. In an example, the preset fragmentation rule includes a memory fragmentation rule, a time fragmentation rule, and the like. Taking the memory fragmentation rule as an example, when it is defined that the fragment memory is 2M and the size of the video memory is 10M, the number of fragments is 5. After the number of the fragments is determined, the playing position information of each fragment video data is determined according to the video playing position information and the number of the fragments. For example, when the video playing position information is 10-20 minutes, a start point of the first fragment video data is at the tenth minute, an end position of the first fragment video data is at the twelfth minute, a start position of the second fragment video data is at the twelfth minute, and an end position of the second fragment video data is at the fourteenth minute. In a similar way, the video playing position information of the remaining three fragments can be known.

In an example, the streaming media video data processing method includes:
Step S602, the terminal sends an FLV video playing request to the cache acceleration server.

Step S604, the cache acceleration server determines whether corresponding metadata is present according to the FLV video playing request, and if so, the process goes to Step S606A, or if not, the process goes to Step S606B.

Step S606A, it is determined whether video data corresponding to the FLV video playing request is present, and if so, the process goes to Step S616B, or if not, the process goes to Step S612B.

Step S606B, the cache acceleration server re-slices the preset drag parameter START =0 and END =1 according to the FLV video playing request, and sends the preset drag parameter to the source station.

Step S608B, the source station obtains corresponding video information according to the preset drag parameter, and sends the video information to the cache acceleration server.

Step S610B, the cache acceleration server caches the video information sent from the source station with a file name + METADATA as an identifier, where the video information includes METADATA and video data.

Step S612B, the cache acceleration server returns the sources to the source station in sequence in accordance with a certain fragment size according to a range in the video content identifier of the video playing request in a manner of RANGE header.

Step S614B, the source station responds to the corresponding fragment video data according to the RANGE requested by the cache acceleration server.

Step S616B, the cache acceleration server takes the file name + RANGE as the identifier to cache the fragment video data responded by the source station.

Step S618B, the cache acceleration server judges whether the video playing request carries START or END drag parameter, and if so, the process goes to Step S620B, or if not, the process goes to Step S622B.

Step S620B, the metadata and the fragment video data are spliced into playing data. That is, the data in the video information is deleted except the metadata, and the metadata and the fragment video data are spliced to obtain the playing data.

Step S622B, the fragment video data is spliced to obtain the playing data.

Step S624B, the cache acceleration server sends the playing data to the terminal.

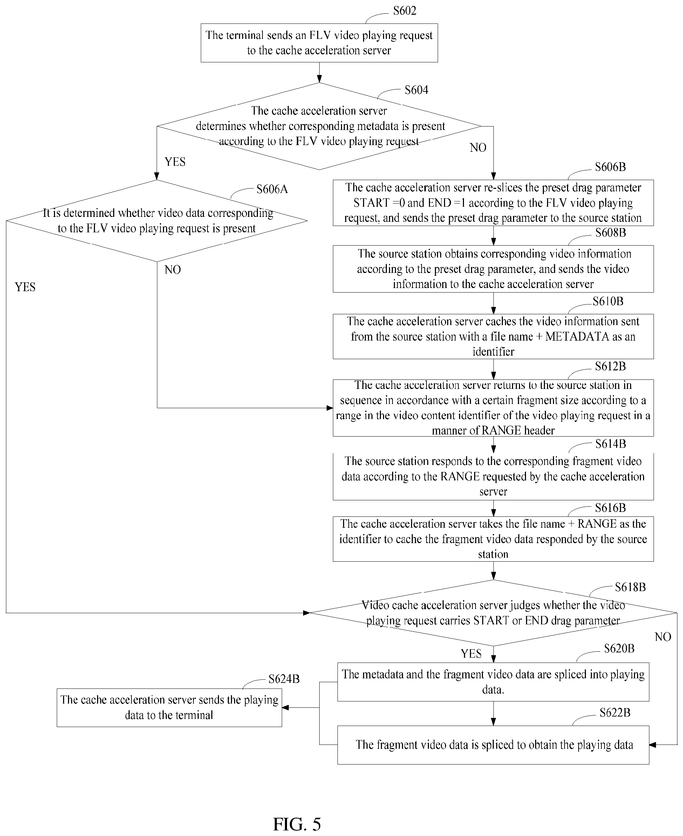

FIGS. 2 to 5 are schematic flowcharts illustrating a streaming media video data processing method according to an embodiment. It should be understood that although steps in the flowcharts of FIGS. 2 to 5 are shown in order as indicated by the arrows, the steps are not necessarily performed in the order as indicated by the arrows. Unless explicitly stated herein, the steps are not limited to being performed in the exact order illustrated and may be performed in other orders. Moreover, at least some of the steps in FIGS. 2 to 5 may include multiple sub-steps or multiple stages that are not necessarily performed at the same time but may be performed at different times, and the sub-steps or stages are not necessarily performed sequentially but may be performed in turn or alternatively with other steps or at least some of the sub-steps or stages of other steps.

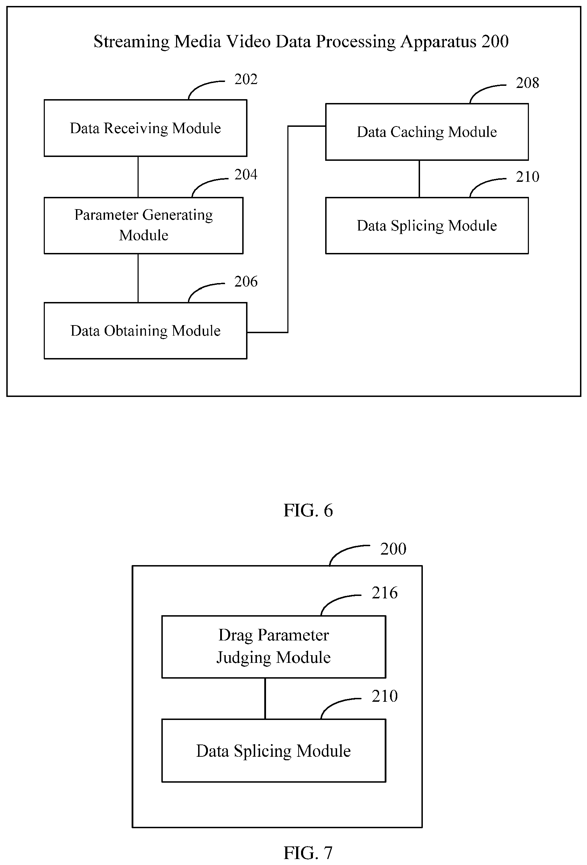

In an embodiment, as shown in FIG. 6, there is provided a streaming media video data processing apparatus 200, including:
a data receiving module 202 configured to receive a video playing request sent from at least one terminal, where the video playing request carries a video content identifier and corresponding video memory information;
a parameter generating module 204 configured to generate a preset drag parameter corresponding to the video content identifier;
a data obtaining module 206 configured to obtain, from a source station, video information corresponding to the preset drag parameter, the video information including metadata;
a data caching module 208 configured to determine fragment information according to the video memory information, obtain fragment video data corresponding to the fragment information from the source station, and cache the fragment video data; and
a data splicing module 210 configured to splice the metadata and the fragment video data according to the video playing request to obtain corresponding playing data.

In an embodiment, the streaming media video data processing apparatus further includes:
a metadata judging module 212 configured to judge whether metadata corresponding to the video playing request is present, wherein if present, the processing returns to the data caching module 208, or if not present, the processing returns to the data obtaining module 206.

In an embodiment, the streaming media video data processing apparatus further includes:
a video data determining module 214 configured to judge whether all the fragment video data corresponding to the video playing request is cached, wherein when all the fragment video data is cached, the processing returns to the data splicing module 208; or when not all the fragment video data is cached, the processing returns to the data obtaining module 206.

In an embodiment, as shown in FIG. 7, the streaming media video data processing apparatus further includes:
a drag parameter judging module 216 configured to judge whether the video playing request contains a video drag parameter.

The data splicing module 210 is further configured to splice the metadata and the fragment video data corresponding to the video drag parameter to obtain playing data, when the video playing request contains the video drag parameter, or splice the fragment video data corresponding to the video playing request to be the playing data when the video playing request does not contain the video drag parameter.

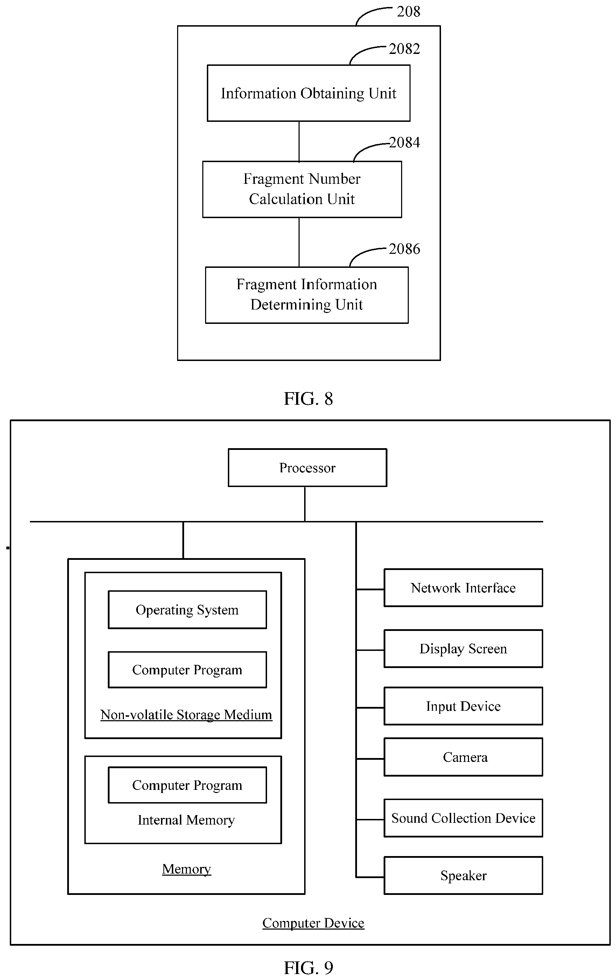

In an embodiment, as shown in FIG. 8, the data caching module 208 includes:
an information obtaining unit 2082 configured to obtain a preset fragmentation rule;
a fragment number calculation unit 2084 configured to determine the number of video fragments according to a size of video memory and the preset fragmentation rule; and
a fragment information determining unit 2086 configured to determine the playing position information of each fragment video data according to video playing position information and the number of fragments.

In an embodiment, the streaming media video data processing apparatus further includes:
a data sending module 218, configured to extract a terminal identifier carried in the video playing request and send the playing data to a terminal corresponding to the terminal identifier.

FIG. 9 is a diagram illustrating an internal structure of a computer device according to an embodiment. The computer device may specifically be the terminal 110 (or the cache acceleration server 120) in FIG. 1. As shown in FIG. 9, the computer apparatus includes a processor, a memory, a network interface, an input device, and a display screen, which are connected through a system bus. The memory comprises a non-volatile storage medium and an internal memory. The non-volatile storage medium of the computer device stores an operating system and may also store a computer program, which when executed by the processor, can enable the processor to implement the streaming media video data processing method. The internal memory may also store a computer program, which when executed by the processor, can enable the processor to execute the streaming media video data processing method. The display screen of the computer device can be a liquid crystal display screen or an electronic ink display screen. The input device of the computer device can be a touch layer covered on the display screen, or can be a key, a track ball or a touch pad arranged on a shell of the computer device, or can be an external keyboard, a touch pad or a mouse, for example.

It could be appreciated by those skilled in the art that the configuration shown in FIG. 9 is a block diagram of only a portion of the configuration associated with the schemes of the disclosure and does not constitute a limitation on the computer device to which the schemes of the disclosure are applied. A particular computer device can include more or less components than shown, or a combination of some components, or a different arrangement of components.

In an embodiment, the streaming media video data processing apparatus according to the present disclosure may be embodied in the form of a computer program which can be operated on the computer device as shown in FIG. 9. The memory of the computer device may store various program modules that constitute the streaming media video data processing apparatus, such as the data receiving module 202, the parameter generating module 204, the data obtaining module 206, the data caching module 208, and the data splicing module 210 as shown in FIG. 6. The computer program constituted by the program modules allows the processor to execute the steps in the streaming media video data processing method according to the embodiments of the present disclosure as described in the specification.

For example, the computer device as shown in FIG. 9 can execute, by the data receiving module 202 in the streaming video data processing apparatus as shown in FIG. 6, the step of receiving the video playing request sent from at least one terminal, where the video playing request carries the video content identifier and corresponding video memory information. The computer device may execute, by the parameter generating module 204, the step of generating the preset drag parameter corresponding to the video content identifier. The computer device may execute, by the data obtaining module 206, the step of obtaining video information corresponding to the preset drag parameter from the source station, where the video information includes metadata. The computer device may execute, by the data caching module 208, the step of determining the fragment information according to the video memory information, obtaining the fragment video corresponding to the fragment information from the source station, and caching the fragment video data. The computer device may execute, by the data splicing module 210, the step of splicing the metadata and the fragment video data according to the video playing request to obtain corresponding playing data.

In an embodiment, there is provided a computer device comprising a memory, a processor and a computer program stored on the memory and executable by the processor. The processor when executing the computer program can implement steps of: receiving a video playing request sent from at least one terminal, wherein the video playing request carries a video content identifier and corresponding video memory information; generating a preset drag parameter corresponding to the video content identifier; obtaining video information corresponding to the drag parameter from a source station, wherein the video information comprises metadata; determining fragment information according to the video memory information, obtaining fragment video data corresponding to the fragment information from the source station, and caching the fragment video data; and splicing the metadata and the fragment video data according to the video playing request to obtain corresponding playing data.

In an embodiment, before generating the preset drag parameter corresponding to the video content identifier, the processor, when executing the computer program, can further implement steps of: judging whether the metadata corresponding to the video playing request is present, wherein when the metadata is not present, the process goes to the step of obtaining video information corresponding to the drag parameter from the source station.

In an embodiment, before determining the fragment information according to the video memory information, the processor when executing the computer program can further carry out steps of: judging whether all the fragment video data corresponding to the video playing request is cached, wherein when all the fragment video data is cached, the process goes to the step of splicing the metadata and the fragment video data according to the video playing request to obtain corresponding playing data, or when not all the fragment video data is cached, the step of judging all the fragment video data is continuously carried out until all the fragment video data is cached.

In an embodiment, before splicing the metadata and the fragment video data according to the video playing request to obtain the corresponding playing data, the processor, when executing the computer program, can further carry out steps of: judging whether the video playing request contains the video drag parameter, wherein when the video playing request contains the video drag parameter, the metadata and the fragment video data corresponding to the video drag parameter are spliced to obtain playing data, or when the video playing request does not contain the video drag parameter, the fragment video data corresponding to the video playing request are spliced to be the playing data.

In an embodiment, the video memory information includes video playing position information and a size of video memory, the fragment information includes playing position information of each fragment video data, and the step of determining the fragment information according to the video memory information includes: obtaining a preset fragmentation rule, determining the number of video fragments according to the size of video memory and the preset fragmentation rule, and determining playing position information of each fragment video data according to the video playing position information and the number of the video fragments.

In an embodiment, the video playing request carries the terminal identifier, and after splicing the metadata and the fragment video data according to the video playing request to obtain the corresponding playing data, the processor when executing the computer program can further carry out steps of: extracting the terminal identifier carried in the video playing request and sending the playing data to a terminal corresponding to the terminal identifier.

In an embodiment, there is provided a computer-readable storage medium, on which a computer program is stored and which, when executed by a processor, performs steps of: receiving a video playing request sent from at least one terminal, wherein the video playing request carries a video content identifier and corresponding video memory information, generating a preset drag parameter corresponding to the video content identifier; obtaining video information corresponding to the drag parameter from a source station, wherein the video information includes metadata; determining fragment information according to the video memory information, obtaining fragment video data corresponding to the fragment information from the source station, and caching the fragment video data; and splicing the metadata and the fragment video data according to the video playing request to obtain corresponding playing data.

In an embodiment, before generating the preset drag parameter corresponding to the video content identifier, the processor, when executing the computer program, can further carry out steps of: judging whether the metadata corresponding to the video playing request is present, wherein when the metadata is not present, the process goes to the step of obtaining the video information corresponding to the drag parameter from the source station.

In an embodiment, before determining the fragment information according to the video memory information, the processor, when executing the computer program, can further carry out steps of: judging whether all the fragment video data corresponding to the video playing request is cached, wherein when all the fragment video data is cached, the process goes to the step of splicing the metadata and the fragment video data according to the video playing request to obtain corresponding playing data, or when not all the fragment video data is cached, the step of judging all the fragment video data is continuously carried out until all the fragment video data is cached.

In an embodiment, before splicing the metadata and the fragment video data according to the video playing request to obtain the corresponding playing data, the processor, when executing the computer program, can further carry out steps of: judging whether the video playing request contains the video drag parameter, wherein when the video playing request contains the video drag parameter, the metadata and the fragment video data corresponding to the video drag parameter are spliced to obtain playing data, or when the video playing request does not contain the video drag parameter, the fragment video data corresponding to the video playing request are spliced to be the playing data.

In an embodiment, the video memory information includes video playing position information and a size of video memory, the fragment information includes playing position information of each fragment video data, and the step of determining the fragment information according to the video memory information includes: obtaining a preset fragmentation rule, determining the number of video fragments according to the size of video memory and the preset fragmentation rule, and determining playing position information of each fragment video data according to the video playing position information and the number of the video fragments.

In an embodiment, the video playing request carries the terminal identifier, and after splicing the metadata and the fragment video data according to the video playing request to obtain the corresponding playing data, the processor when executing the computer program can further carry out steps of: extracting the terminal identifier carried in the video playing request and sending the playing data to a terminal corresponding to the terminal identifier.

It would be understood by those of ordinary skill in the art that all or some of the steps of the methods, systems, functional modules/units in the devices disclosed above may be implemented as software, firmware, hardware, or suitable combinations thereof. In a hardware implementation, the division between functional modules/units mentioned in the above description does not necessarily correspond to the division of physical components; for example, one physical component may have multiple functions, or one function or step may be performed by several physical components in cooperation. Some or all of the physical components may be implemented as software executed by a processor, such as a central processing unit, digital signal processor, or microprocessor, or as hardware, or as an integrated circuit, such as an application specific integrated circuit. Such software may be distributed on computer readable media, which may include computer storage media (or non-transitory media) and communication media (or transitory media). The term computer storage media includes volatile and nonvolatile, removable and non-removable media implemented in any method or technology for storage of information (such as computer readable instructions, data structures, program modules or other data), as is well known to those skilled in the art. Computer storage media includes, but is not limited to, RAM, ROM, EEPROM, flash memory or other memory technology; CD-ROM, Digital Versatile Disks (DVD) or other optical disk storage; magnetic cassettes, magnetic tape, magnetic disk storage or other magnetic storage devices; or any other medium which can be used to store the desired information and which can accessed by a computer. In addition, communication media typically embodies computer readable instructions, data structures, program modules or other data in a modulated data signal such as a carrier wave or other transport mechanism and includes any information delivery media, as is well known to those skilled in the art.

It should be noted that, in the context, relational terms such as "first", "second" and the like, are used solely to distinguish one entity or action from another entity or action without necessarily requiring or implying any actual such relationship or order between such entities or actions. Also, the terms "comprise", "include" or any other variation thereof, are intended to cover a non-exclusive inclusion, such that a process, method, article, or apparatus that comprises a list of elements does not include only those elements but also may include other elements not expressly listed or inherent to such process, method, article, or apparatus. Without further limitation, an element defined by the phrase "comprising an ... ..." does not exclude the presence of other identical elements in the process, method, article, or apparatus that comprises the element.

By obtaining the metadata through the generated preset drag parameters and separating the metadata and the video data, the disk space can be saved by caching data in a cache separating manner.

Disclosed above are the method and apparatus, computer device, and storage medium of processing streaming media video data. The method includes the steps of receiving a video playing request sent from at least one terminal, wherein the video playing request carries a video content identifier and corresponding video memory information; generating a preset drag parameter corresponding to the video content identifier; obtaining video information corresponding to the preset drag parameter from a source station, wherein the video information includes metadata; determining fragment information according to the video memory information, obtaining a fragment video corresponding to the fragment information from the source station, and caching fragment video data; and splicing the metadata and the fragment video data according to the video playing request to obtain corresponding playing data. By obtaining the metadata through the generated preset drag parameters and separating the metadata and the video data, the disk space can be saved by caching data in a cache separating manner.

Provided above are only the detailed implementations of the present disclosure, so as to enable those skilled in the art to understand or implement the present disclosure. Thus, the present disclosure is not intended to be limited to the embodiments shown herein but to the broadest scope consistent with the principles and novel features disclosed herein.

## Claims

1. A method of streaming media video data processing, **characterized in that** the method comprises steps of:
receiving (S202) a video playing request sent from at least one terminal, wherein the video playing request carries a video content identifier and corresponding video memory information;
judging whether metadata corresponding to the video playing request is present;
generating (S204) a preset drag parameter corresponding to the video content identifier, wherein the preset drag parameter is a preset parameter including a preset start position parameter and a preset end position parameter, and the preset drag parameter is configured to obtain video information corresponding to the video content identifier;
in response to non-presence of the metadata corresponding to the video playing request, obtaining (S206) video information corresponding to the preset drag parameter from a source station, the video information including the metadata and streaming media video data determined according to the dragging start position and the dragging end position of the preset drag parameter, and the source station being a server for storing the streaming media video data;
in response to presence of the metadata corresponding to the video playing request, determining (S208) fragment information, wherein the fragment information comprises playing position information of each fragment video data,
according to the video memory information, obtaining fragment video data corresponding to the fragment information from the source station, and caching the fragment video data;
judging (S402) whether the video playing request contains a video drag parameter;
in response to determining that the video playing request contains the video drag parameter, splicing (S404) the metadata and the fragment video data corresponding to the video drag parameter to obtain the playing data, wherein the video drag parameter is an identifier for describing the streaming media video data to be cached, and wherein the video information comprises metadata and video data determined according to the dragging start position and the dragging end position of the preset drag parameter; and
in response to determining that the video playing request does not contain the video drag parameter, splicing (S406) the fragment video data corresponding to the video playing request to be the playing data.

2. The method according to claim 1, wherein before determining (S208) fragment information according to the video memory information, the method further comprises:
judging whether all fragmented video data corresponding to the video playing request is cached, wherein
when not all the fragment video data is cached, the step of judging all the fragment video data is continuously carried out until all the fragment video data is cached.

3. The method according to claim 1, wherein the video memory information includes video playing position information and a size of video memory and the step of determining (S208) fragment information according to the video memory information includes:
obtaining (S2082) a preset fragmentation rule;
determining (S2084) the number of video fragments according to the size of video memory and the preset fragmentation rule; and
determining (S2086) the playing position information of each fragment video data according to the video playing position information and the number of video fragments.

4. The method according to any one of claims 1 to 3, wherein the video playing request carries a terminal identifier, and after the step of splicing the metadata and the fragmented video data according to the video playing request to obtain corresponding playing data, the method further comprises:
extracting the terminal identifier carried in the video playing request; and
sending the playing data to a terminal corresponding to the terminal identifier.

5. An apparatus of streaming media video data processing, **characterized in that** the apparatus comprises:
a data receiving module (202), configured to receive a video playing request sent from at least one terminal, where the video playing request carries a video content identifier and corresponding video memory information;
a metadata judging module (212) configured to judge whether metadata corresponding to the video playing request is present;
a parameter generating module (204), configured to generate a preset drag parameter corresponding to the video content identifier, wherein the preset drag parameter is a preset parameter including a preset start position parameter and a preset end position parameter, and the preset drag parameter is configured to obtain video information corresponding to the video content identifier;
a data obtaining module (206), configured to obtain video information corresponding to the preset drag parameter from a source station in response to non-presence of the metadata corresponding to the video playing request, the video information including the metadata and streaming media video data determined according to the dragging start position and the dragging end position of the preset drag parameter, and the source station being a server for storing streaming media video data,
a data caching module (208), configured to determine fragment information, wherein the fragment information comprises playing position information of each fragment video data, according to the video memory information, obtain fragment video corresponding to the fragment information from the source station, and cache the fragment video data, in response to presence of the metadata corresponding to the video playing request; and
a metadata judging module, configured to judge whether metadata corresponding to the preset drag parameter is present;
a data splicing module (210), configured to splice the metadata and the fragment video data corresponding to a video drag parameter to obtain playing data, in response to determining that the video playing request contains the video drag parameter, wherein the video drag parameter is an identifier for describing the streaming media video data to be cached;
the data splicing module (210) further configured to splice the fragment video data corresponding to the video playing request to obtain the playing data, in response to determining that the video playing request does not contain the video drag parameter, and wherein the video information comprises metadata and video data determined according to the dragging start position and the dragging end position of the preset drag parameter.

6. A computer device comprising a memory, a processor and a computer program stored on the memory and executable by the processor, wherein the processor, when executing the computer program, carries out the steps of the method according to any one of claims 1 to 4.

7. A computer-readable storage medium, on which a computer program is stored, wherein the computer program, when executed by a processor, carries out the steps of the method according to any one of claims 1 to 4.

## Patentansprüche

1. Verfahren zum Streamen von Medien-Videodatenverarbeitung, **dadurch gekennzeichnet, dass** das Verfahren die folgenden Schritte umfasst:
Empfangen (S202) einer Videowiedergabeanforderung, die von mindestens einem Endgerät gesendet wird, wobei die Videowiedergabeanforderung eine Videoinhaltskennung und entsprechende Videospeicherinformationen trägt;
Beurteilen, ob Metadaten, die der Videowiedergabeanforderung entsprechen, vorhanden sind; Erzeugen (S204) eines voreingestellten Drag-Parameters, der der Videoinhaltskennung entspricht, wobei der voreingestellte Drag-Parameter ein voreingestellter Parameter ist, der einen voreingestellten Startpositionsparameter und einen voreingestellten Endpositionsparameter beinhaltet, und der voreingestellte Drag-Parameter dazu ausgelegt ist, Videoinformationen zu erhalten, die der Videoinhaltskennung entsprechen;
als Reaktion auf das Nichtvorhandensein der Metadaten, die der Videowiedergabeanforderung entsprechen, Erhalten (S206) von Videoinformationen, die dem voreingestellten Drag-Parameter entsprechen, von einer Quellstation, wobei die Videoinformationen die Metadaten und Streaming-Medien-Videodaten beinhalten, die gemäß der Drag-StartPosition und der Drag-End-Position des voreingestellten Drag-Parameters bestimmt werden, und wobei die Quellstation ein Server zum Speichern der Streaming-Medien-Videodaten ist;
als Reaktion auf das Vorhandensein der Metadaten, die der Videowiedergabeanforderung entsprechen, Bestimmen (S208) von Fragmentinformationen, wobei die Fragmentinformationen Wiedergabepositionsinformationen jedes Fragmentvideodatensatzes umfassen, gemäß den Videospeicherinformationen Abrufen von Fragmentvideodaten, die den Fragmentinformationen entsprechen, von der Quellstation sowie Zwischenspeichern der Fragmentvideodaten;
Beurteilen (S402), ob die Videowiedergabeanforderung einen Video-Drag-Parameter enthält;
als Reaktion auf das Bestimmen, dass die Videowiedergabeanforderung den Video-Drag-Parameter enthält, Spleißen (S404) der Metadaten und der Fragmentvideodaten, die dem Video-Drag-Parameter entsprechen, um die Wiedergabedaten zu erhalten, wobei der Video-Drag-Parameter eine Kennung zum Beschreiben der Streaming-Medien-Videodaten ist, die zwischengespeichert werden sollen, und wobei die Videoinformationen Metadaten und Videodaten umfassen, die gemäß der Drag-Startposition und der Drag-Endposition des voreingestellten Drag-Parameters bestimmt werden; und
als Reaktion auf das Bestimmen, dass die Videowiedergabeanforderung den Video-Drag-Parameter nicht enthält, Spleißen (S406) der Fragmentvideodaten, die der Videowiedergabeanforderung entsprechen, als die Wiedergabedaten.

2. Verfahren nach Anspruch 1, wobei das Verfahren vor dem Bestimmen (S208) von Fragmentinformationen gemäß den Videospeicherinformationen ferner Folgendes umfasst:
Beurteilen, ob alle fragmentierten Videodaten, die der Videowiedergabeanforderung entsprechen, zwischengespeichert sind, wobei
wenn nicht alle Fragmentvideodaten zwischengespeichert sind, wird der Schritt des Beurteilens aller Fragmentvideodaten kontinuierlich durchgeführt, bis alle Fragmentvideodaten zwischengespeichert sind.

3. Verfahren nach Anspruch 1, wobei die Videospeicherinformationen Video-Wiedergabepositionsinformationen und eine Größe des Videospeichers beinhalten und der Schritt des Bestimmens (S208) von Fragmentinformationen gemäß den Videospeicherinformationen Folgendes beinhaltet:
Erhalten (S2082) einer voreingestellten Fragmentierungsregel;
Bestimmen (S2084) der Anzahl von Videofragmenten gemäß der Größe des Videospeichers und der voreingestellten Fragmentierungsregel; und
Bestimmen (S2086) der Wiedergabepositionsinformationen jedes Fragmentvideodatensatzes gemäß den Video-Wiedergabepositionsinformationen und der Anzahl von Videofragmenten.

4. Verfahren nach einem der Ansprüche 1 bis 3, wobei die Videowiedergabeanforderung eine Endgerätkennung trägt, und nach dem Schritt des Spleißens der Metadaten und der fragmentierten Videodaten gemäß der Videowiedergabeanforderung, um entsprechende Wiedergabedaten zu erhalten, das Verfahren ferner Folgendes umfasst:
Extrahieren der Endgerätekennung, die in der Videowiedergabeanforderung getragen wird; und
Senden der Wiedergabedaten an ein Endgerät, das der Endgerätekennung entspricht.

5. Vorrichtung zum Streamen von Medien-Videodatenverarbeitung, **dadurch gekennzeichnet, dass** die Vorrichtung Folgendes umfasst:
ein Datenempfangsmodul (202), das dazu ausgelegt ist, eine Videowiedergabeanforderung zu empfangen, die von mindestens einem Endgerät gesendet wird, wobei die Videowiedergabeanforderung eine Videoinhaltskennung und entsprechende Videospeicherinformationen trägt;
ein Metadatenbeurteilungsmodul (212), das dazu ausgelegt ist, zu beurteilen, ob Metadaten, die der Videowiedergabeanforderung entsprechen, vorhanden sind;
ein Parametererzeugungsmodul (204), das dazu ausgelegt ist, einen voreingestellten Drag-Parameter zu erzeugen, der der Videoinhaltskennung entspricht, wobei der voreingestellte Drag-Parameter ein voreingestellter Parameter ist, der einen voreingestellten Startpositionsparameter und einen voreingestellten Endpositionsparameter beinhaltet, und der voreingestellte Drag-Parameter dazu ausgelegt ist, Videoinformationen zu erhalten, die der Videoinhaltskennung entsprechen;
ein Datenbeschaffungsmodul (206), das dazu ausgelegt ist, Videoinformationen, die dem voreingestellten Drag-Parameter entsprechen, von einer Quellstation als Reaktion auf das Nichtvorhandensein der Metadaten, die der Videowiedergabeanforderung entsprechen, zu erhalten, wobei die Videoinformationen die Metadaten und Streaming-Medien-Videodaten beinhalten, die gemäß der Drag-StartPosition und der Drag-End-Position des voreingestellten Drag-Parameters bestimmt werden, und wobei die Quellstation ein Server zum Speichern von Streaming-Medien-Videodaten ist,
ein Daten-Caching-Modul (208), das dazu ausgelegt ist, Fragmentinformationen zu bestimmen, wobei die Fragmentinformationen Wiedergabepositionsinformationen jedes Fragmentvideodatensatzes gemäß den Videospeicherinformationen umfassen, das den Fragmentinformationen entsprechende Fragmentvideo von der Quellstation abzurufen und die Fragmentvideodaten im Caching-Speicher zwischenzuspeichern, wenn Metadaten vorhanden sind, die der Videowiedergabeanforderung entsprechen; und
ein Metadaten-Beurteilungsmodul, das dazu ausgelegt ist, zu beurteilen, ob Metadaten, die dem voreingestellten Drag-Parameter entsprechen, vorhanden sind;
ein Datenspleißmodul (210), das dazu ausgelegt ist, die Metadaten und die Fragmentvideodaten, die einem Video-Drag-Parameter entsprechen, zu spleißen, um Wiedergabedaten zu erhalten, als Reaktion auf das Bestimmen, dass die Videowiedergabeanforderung den Video-Drag-Parameter enthält, wobei der Video-Drag-Parameter eine Kennung zum Beschreiben der Streaming-Medien-Videodaten, die zwischengespeichert werden sollen, ist;
das Datenspleißmodul (210), das ferner dazu ausgelegt ist, die Fragmentvideodaten, die der Videowiedergabeanforderung entsprechen, zu spleißen, um die Wiedergabedaten zu erhalten, als Reaktion auf das Bestimmen, dass die Videowiedergabeanforderung den Video-Drag-Parameter nicht enthält, und wobei die Videoinformationen Metadaten und Videodaten umfassen, die gemäß der Drag-Startposition und der Drag-Endposition des voreingestellten Drag-Parameters bestimmt werden.

6. Computervorrichtung, die einen Speicher, einen Prozessor und ein Computerprogramm umfasst, die in dem Speicher gespeichert und durch den Prozessor ausführbar sind, wobei der Prozessor beim Ausführen des Computerprogramms die Schritte des Verfahrens nach einem der Ansprüche 1 bis 4 ausführt.

7. Computerlesbares Speichermedium, auf dem ein Computerprogramm gespeichert ist, wobei das Computerprogramm, wenn es durch einen Prozessor ausgeführt wird, die Schritte des Verfahrens nach einem der Ansprüche 1 bis 4 ausführt.

## Revendications

1. Procédé de traitement de données vidéo multimédia de diffusion en continue, **caractérisé en ce que** le procédé comprend les étapes suivantes :
la réception (S202) d'une demande de lecture vidéo envoyée en provenance d'au moins un terminal, dans lequel la demande de lecture vidéo porte un identifiant de contenu vidéo et des informations de mémoire vidéo correspondantes ;
l'évaluation du fait que des métadonnées correspondant à la demande de lecture vidéo sont présentes ou non ;
la génération (S204) d'un paramètre de glissement prédéfini correspondant à l'identifiant de contenu vidéo, dans lequel le paramètre de glissement prédéfini est un paramètre prédéfini incluant un paramètre prédéfini de position de début et un paramètre prédéfini de position de fin, et le paramètre de glissement prédéfini est configuré pour obtenir des informations vidéo correspondant à l'identifiant de contenu vidéo ;
en réponse à la non-présence des métadonnées correspondant à la demande de lecture vidéo, l'obtention (S206) d'informations vidéo correspondant au paramètre de glissement prédéfini en provenance d'une station source, les informations vidéo incluant les métadonnées et données vidéo multimédia de diffusion en continue déterminées selon la position de début de glissement et la position de fin de glissement du paramètre de glissement prédéfini, et la station source étant un serveur pour stocker les données vidéo multimédia de diffusion en continue ;
en réponse à la présence des métadonnées correspondant à la demande de lecture vidéo, la détermination (S208) d'informations de fragment, dans lequel les informations de fragment comprennent des informations de position de lecture de chaque données vidéo de fragment, selon les informations de mémoire vidéo, l'obtention de données vidéo de fragment correspondant aux informations de fragment en provenance de la station source, et la mise en cache des données vidéo de fragment ;
l'évaluation (S402) du fait que la demande de lecture vidéo contient ou non un paramètre de glissement vidéo ; en réponse à la détermination que la demande de lecture vidéo contient le paramètre de glissement vidéo, l'assemblage (S404) des métadonnées et des données vidéo de fragment correspondant au paramètre de glissement vidéo pour obtenir les données de lecture, dans lequel le paramètre de glissement vidéo est un identifiant pour décrire les données vidéo multimédia de diffusion en continue devant être mises en cache, et dans lequel les informations vidéo comprennent des métadonnées et des données vidéo déterminées selon la position de début de glissement et la position de fin de glissement du paramètre de glissement prédéfini ; et
en réponse à la détermination que la demande de lecture vidéo ne contient pas le paramètre de glissement vidéo, l'assemblage (S406) des données vidéo de fragment correspondant à la demande de lecture vidéo pour être les données de lecture.

2. Procédé selon la revendication 1, dans lequel, avant la détermination (S208) d'informations de fragment selon les informations de mémoire vidéo, le procédé comprend en outre :
l'évaluation du fait que toutes les données vidéo fragmentées correspondant à la demande de lecture vidéo sont ou non mises en cache, dans lequel
lorsque toutes les données vidéo de fragment ne sont pas mises en cache, l'étape de l'évaluation de toutes les données vidéo de fragment est réalisée en continu jusqu'à ce que toutes les données vidéo de fragment soient mises en cache.

3. Procédé selon la revendication 1, dans lequel les informations de mémoire vidéo incluent des informations de position de lecture vidéo et une taille de mémoire vidéo et l'étape de la détermination (S208) d'informations de fragment selon les informations de mémoire vidéo inclut :
l'obtention (S2082) d'une règle de fragmentation prédéfinie ;
la détermination (S2084) du nombre de fragments vidéo selon la taille de mémoire vidéo et la règle de fragmentation prédéfinie ; et
la détermination (S2086) des informations de position de lecture de chaque données vidéo de fragment selon les informations de position de lecture vidéo et le nombre de fragments vidéo.

4. Procédé selon l'une quelconque des revendications 1 à 3, dans lequel la demande de lecture vidéo porte un identifiant de terminal, et après l'étape de l'assemblage des métadonnées et des données vidéo fragmentées selon la demande de lecture vidéo pour obtenir des données de lecture correspondantes, le procédé comprend en outre :
l'extraction de l'identifiant de terminal porté dans la demande de lecture vidéo ; et
l'envoi des données de lecture à un terminal correspondant à l'identifiant de terminal.

5. Appareil de traitement de données vidéo multimédia de diffusion en continue, **caractérisé en ce que** l'appareil comprend :
un module de réception de données (202), configuré pour recevoir une demande de lecture vidéo envoyée en provenance d'au moins un terminal, où la demande de lecture vidéo porte un identifiant de contenu vidéo et des informations de mémoire vidéo correspondantes ;
un module d'évaluation de métadonnées (212) configuré pour évaluer le fait que métadonnées correspondant à la demande de lecture vidéo sont présentes ou non ;
un module de génération de paramètre (204), configuré pour générer un paramètre de glissement prédéfini correspondant à l'identifiant de contenu vidéo, dans lequel le paramètre de glissement prédéfini est un paramètre prédéfini incluant un paramètre prédéfini de position de début et un paramètre prédéfini de position de fin, et le paramètre de glissement prédéfini est configuré pour obtenir des informations vidéo correspondant à l'identifiant de contenu vidéo ;
un module d'obtention de données (206), configuré pour obtenir des informations vidéo correspondant au paramètre de glissement prédéfini en provenance d'une station source en réponse à la non-présence des métadonnées correspondant à la demande de lecture vidéo, les informations vidéo incluant les métadonnées et données vidéo multimédia de diffusion en continue déterminées selon la position de début de glissement et la position de fin de glissement du paramètre de glissement prédéfini, et la station source étant un serveur pour stocker des données vidéo multimédia de diffusion en continue,
un module de mise en cache de données (208), configuré pour déterminer des informations de fragment, dans lequel les informations de fragment comprennent des informations de position de lecture de chaque données vidéo de fragment, selon les informations de mémoire vidéo, obtenir des données vidéo de fragment correspondant aux informations de fragment en provenance de la station source, et mettre en cache les données vidéo de fragment, en réponse à la présence des métadonnées correspondant à la demande de lecture vidéo ; et
un module d'évaluation de métadonnées, configuré pour évaluer le fait que des métadonnées correspondant au paramètre de glissement prédéfini sont présentes ou non ;
un module d'assemblage de données (210), configuré pour assembler les métadonnées et les données vidéo de fragment correspondant à un paramètre de glissement vidéo pour obtenir des données de lecture, en réponse à la détermination que la demande de lecture vidéo contient le paramètre de glissement vidéo, dans lequel le paramètre de glissement vidéo est un identifiant pour décrire les données vidéo multimédia de diffusion en continue devant être mises en cache ;
le module d'assemblage de données (210) étant en outre configuré pour assembler les données vidéo de fragment correspondant à la demande de lecture vidéo pour obtenir les données de lecture, en réponse à la détermination que la demande de lecture vidéo ne contient pas le paramètre de glissement vidéo, et dans lequel les informations vidéo comprennent des métadonnées et des données vidéo déterminées selon la position de début de glissement et la position de fin de glissement du paramètre de glissement prédéfini.

6. Dispositif ordinateur comprenant une mémoire, un processeur, et un programme d'ordinateur stocké sur la mémoire et exécutable par le processeur, dans lequel le processeur, lorsqu'il exécute le programme d'ordinateur, effectue les étapes du procédé selon l'une quelconque des revendications 1 à 4.

7. Support de stockage lisible par ordinateur, sur lequel un programme d'ordinateur est stocké, dans lequel le programme d'ordinateur, lorsqu'il est exécuté par un processeur, effectue les étapes du procédé selon l'une quelconque des revendications 1 à 4.
